# EUROPEAN PATENT SPECIFICATION

(11) **EP 3 946 881 B1**
(45) Date of publication and mention of the grant of the patent: **26.03.2025**
(21) Application number: 19746231.0
(22) Date of filing: 09.07.2019
(51) Int. Cl.: B29C 45/27

(54) **NOZZLE HEATER**
DÜSENHEIZER
APPAREIL DE CHAUFFAGE À BUSE

(30) Priority: 02.04.2019 US 201962828102 P
(43) Date of publication of application: 09.02.2022
(73) Proprietor: Synventive Molding Solutions, Inc., Peabody, MA 01960 (US)
(72) Inventor: KRAUS, Sebastian Markus, 64625 Bensheim (DE); KREDEL, Gerald, 64678 Winterkasten (DE)
(74) Representative: Fuchs Patentanwälte Partnerschaft mbB
(86) International application number: PCT/US2019/040920
(87) International publication number: WO 2020/204980

(56) References cited:
- EP-A1- 1 413 418
- EP-A2- 0 653 283
- JP-A- H07 142 156
- US-A- 6 163 016

## Description

### BACKGROUND OF THE INVENTION

Heating devices for controllably delivering heat to a fluid passage device such as a downstream nozzle that routes injection fluid from a heated manifold or other source in an injection molding apparatus have been used in a variety of forms such as disclosed in E.P.O. Patent No. 1051059(B1). Other heating devices have been disclosed in E.P.O. Patent No. EP 1 413 418 A1, E.P.O. Application publication no. EP 0653253A2, Patent Abstracts of Japan publication no. 07142156 and U.S. Patent No. 6136016.

### SUMMARY OF THE INVENTION

A heating apparatus in accordance with the invention is set out in appended claims 1-10 and 12-15, in particular in independent claim 1. A method of heating a distal end of an injection nozzle in accordance is set out in appended claim 11.

Such an apparatus can includie a wire or coil (12) that is controllably heatable to an elevated temperature and that is mounted in heat conductive communication (12e) with the heating cylinder (14).

The wire or coil (12) can be embedded (12e) within a groove (14g) formed within the heating cylinder (14c).

The apparatus can include a temperature measuring sensor (18) such as a thermocouple mounted on the downstream or distal end (14de) of the heating cylinder (14c) in thermal isolation (16) from the wire or coil (12, 12e).

The opposing sheet edges (14r, 14l) can be interconnected or attached (14at) to each other after formation of the heating cylinder (14c). Such attachment mechanisms (14at) can comprise one or more of a clasp, a wire, a weld, a clip or the like.

Such an apparatus can further comprise an upstream sleeve or jacket (30) having an extended receiving aperture (30a) having an extended longitudinal length (JL) and interior extended jacket surface (30is), the upstream sleeve or jacket (30) being adapted to receive an upstream end or portion (14ue) of the heater cylinder (14c) along the extended longitudinal length (JL), the upstream sleeve or jacket (30) being further adapted such that the interior extended jacket surface (30is) engages an outer circumferential surface (14os) of the upstream end or portion (14ue) of the heater cylinder (14c).

The stabilization ring or cylinder (20) can be adapted to be compressed (F) around an outer circumferential surface (20ca) into a fixedly formed or deformed body (20db) having a body size such that the inner circumferential surface (20is) of the stabilization ring or cylinder (20, 20db) is compressibly engaged with the outer circumferential surface (40os) of the downstream or distal end (14de) of the heating cylinder (14c)

The inner circumferential ring surface (20is) and the outer circumferential surface (14os) extending along at least a portion of the downstream or distal longitudinal length (DL) of the downstream or distal end (14de) of the heater cylinder (14c) can have complementary threads (14t, 20t) adapted to threadably engage and interconnect with each other.

The stabilization ring or cylinder (20) can be comprised of an iron containing material.

The apparatus can further comprising a temperature measuring sensor (18o) mounted on or in the nozzle (40) or a nozzle mount (40ni) in close adjacency to the outer surface (14os) of the downstream or distal end (14de) of the heater cylinder (14c).

### BRIEF DESCRIPTION OF THE DRAWINGS

The above and further advantages of the invention may be better understood by referring to the following description in conjunction with the accompanying drawings in which:
Fig. 1A is a top view of one of two opposing sides of a sheet form heating sleeve element of a heating apparatus according to the invention.
Fig. 1B is a front perspective view of the sheet form heating sleeve element of Fig. 1A formed into a cylindrical configuration.
Fig. 1C is a rendering of the sequential process by which a heating apparatus according to the invention is formed from the interconnection of a sheet form heating sleeve element as shown in Figs. 1A, 1B and a distal end fastening cylinder.
Fig. 1D is a more detailed top view of one of the two opposing sides of the sheet form heating element shown in Figs 1A, 1B.
Fig. 2 is an exploded perspective view of a sheet form heating sleeve element as shown in Figs. 1A, !B, 1D together with an associated nozzle, a distal end fastening cylinder and main nozzle body fastening jacket.
Fig. 2A is a front perspective view of the Fig. 2 components fully assembled with the heating sleeve or jacket and distal end fastening cylinder fastened together and assembled together with the nozzle body where the heating sleeve has a longitudinal length (HL) that extends the full longitudinal length (L) of the nozzle around the outside circumferential surface (40os) of the nozzle body.
Fig. 2B is a top view of one side or surface of the sheet form heating element of the Figs. 2, 2A apparatus.
Fig. 2C is a front perspective semi-transparent view of the sheet form heating element and nozzle element of the Figs. 2, 2A apparatus assembled together showing the arrangement of the heating element circumferentially around the outside surface of the nozzle body element.

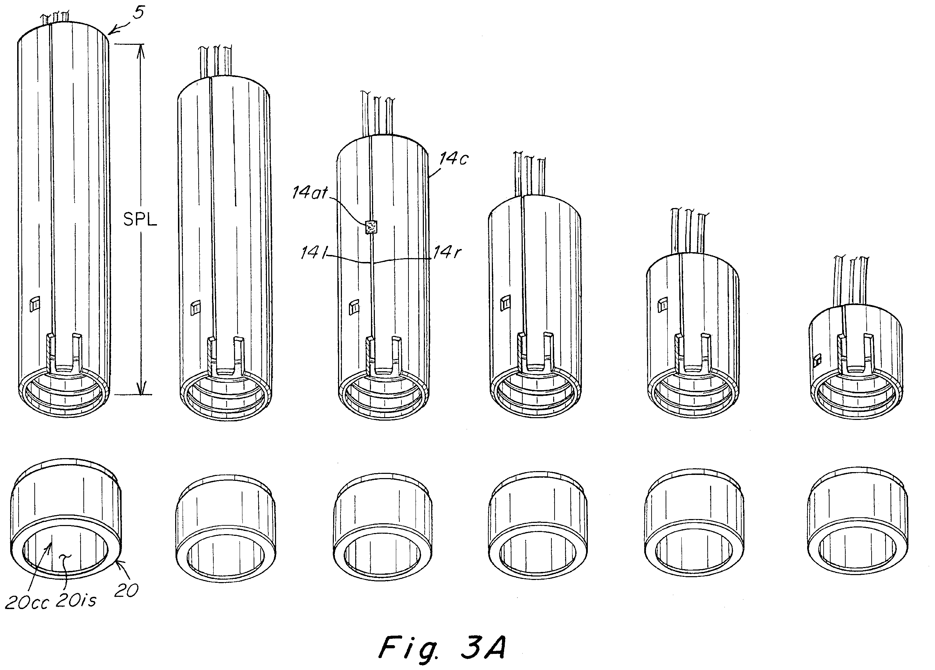

Fig. 3A is a top perspective view of a series of sheet form heating sleeve elements of Fig. 1A formed into a series of cylinders having varying longitudinal lengths each with a distal end cylindrical fastener shown distally exploded from the distal downstream ends of the cylindrically formed heating sleeve elements.

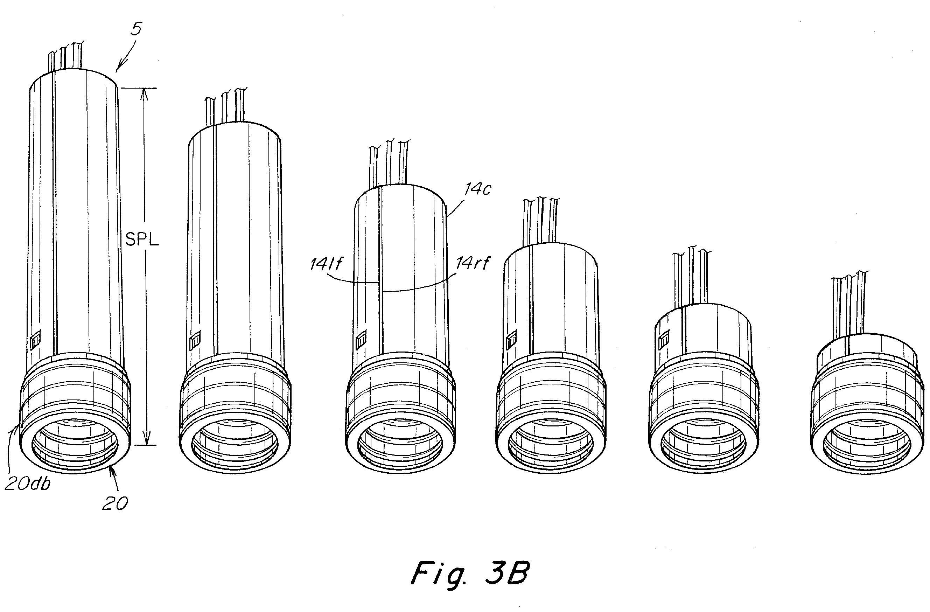

Fig. 3B is a figure similar to Fig. 3A showing the distal end cylindrical fasteners fastened to the distal ends of the heating sleeve elements.
Fig. 4 is a side sectional view of the distal end of an injection molding apparatus nozzle comprised of a nozzle body having a heating apparatus similar to the heating apparatuses shown in Figs. 3A, 3B mounted around at least the distal end of the nozzle.
Fig. 5A is an exploded view of the distal end of a sheet form heating sleeve formed into a cylindrical configuration having a central channel and a threaded distal end complementary to a threaded fastening cylinder for screwable or threaded attachment thereto.
Fig. 5B is a view similar to Fig. 5A showing the components assembled together.
Figs. 6 is a longitudinal sectional view of the distal end of an injection nozzle having a sheet form heating element with heating or thermocouple wires or element wrapped circumferentially around the outside circumferential surface of at least the distal end of the nozzle with a threaded cap element as in Figs. 5A, 5B screwed onto the distal end of the sheet form heating element and showing a receiving tube element receiving and circumferentially enclosing the subassembly of the nozzle and sheet form heating element.
Fig. 7 is a schematic side sectional view of an injection molding system in which a heating apparatus as described above is incorporated into or onto the downstream nozzle elements of the system.

### Detailed Description

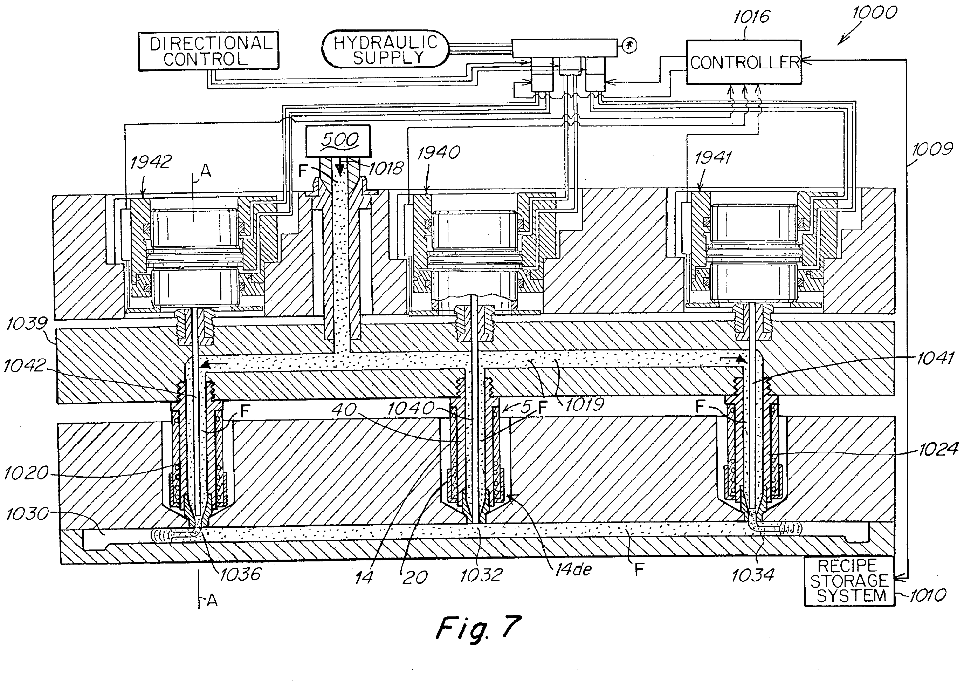

Fig. 7 illustrates an injection molding system 1000 comprised of an injection molding machine 500 that injects an injection fluid 1018 to a heated manifold 1039 for distribution and downstream injection through one or more nozzles 40, 1020, 1024 into the cavity 1030 of a mold 1002. The system 1000 as shown illustrates one 40 of the several nozzles 40 having a heating apparatus 5 according to the invention mounted to the distal end 14de of the heating sleeve or jacket element 10 of the heating apparatus 5. A controller 1016 cam includes a flow control MCU and a recipe storage system 1010 (with a recipe storage MCU that can be mounted on the mold 1002. In such an embodiment, a recipe of process parameters that are stored on the mold storage device 1010 are transmitted via a communication channel 1009 to the main MCU in controller 1016 for execution. In alternative embodiments the control process parameters included in the mold storage device can be stored or programmed into the memory or instruction components of a controller mounted apart from the mold such as controller 1016

As shown, molten material F is fed from an injection molding machine (500) through a main inlet 1018 to a distribution channel 1019 of a manifold 1039. The distribution channel commonly feeds three separate nozzles 1020, 40, 1024 which all commonly feed into a common cavity 1030 of a mold 1002 to make one molded part. The central nozzle 40 is controlled by actuator 1940 and arranged so as to feed into cavity 1030 at an entrance point or gate that is disposed at about the center 1032 of the cavity. As shown, a pair of lateral nozzles 1020, 1024 feed into the mold cavity 1030 at gate locations that are distal 1034, 1036 to the center gate feed position 1032.

As shown in Fig. 7 the injection cycle is typically a cascade process where injection is effected in a sequence from the center nozzle 40 first and at a later predetermined time from the lateral nozzles 1020, 1024. As shown the injection cycle is typically started by first opening the pin 1040 of the center nozzle 40 and allowing the fluid material F (typically polymer or plastic material) to flow up to a position in the cavity just before 1100b, the distally disposed entrance into the cavity of the lateral nozzle 1024. Once the fluid material has further travelled just past the entrance to nozzle 1024, at position 1100p, the center gate 1032 of the center nozzle 40 is typically closed by pin 1040. The lateral gates 1034, 1036 are then opened by upstream withdrawal of lateral nozzle pins 1041, 1042. The rate of upstream withdrawal or travel velocity of lateral pins 1041, 1042 is typically controlled in a manner to avoid defects in the part that is ultimately produced in the cavity.

In alternative embodiments, the center gate 1032 and associated actuator 1940 and valve pin 1040 can remain open at, during and subsequent to the times that the lateral gates 1034, 1036 are opened such that fluid material flows into cavity 1030 through both the center gate 1032 and one or both of the lateral gates 1034, 1036 simultaneously.

When the lateral gates 1034, 1036 are opened and fluid material F is allowed to first enter the mold cavity into the stream that has been injected from center nozzle 40 past gates 1034, 1036, the two streams mix with each other. If the velocity of the fluid material is too high, such as often occurs when the flow velocity of injection fluid material through gates 1034, 1036 is at maximum, a visible line or defect in the mixing of the two streams will appear in the final cooled molded product at the areas where gates 1034, 1036 inject into the mold cavity. By injecting fluid at a reduced flow rate for a relatively short period of time at the beginning when the gates 1034, 1036 are first opened and following the time when fluid first enters the flow streamthe appearance of a visible line or defect in the final molded product can be reduced or eliminated.

The rate or velocity of upstream withdrawal of valve pins 1040, 1041, 1042 starting from the closed position is controlled via controller 1016 or MCU 1010 which controls the rate and direction of flow of hydraulic fluid from a drive system to actuators 1940, 1941, 1942. Although fluid driven actuators are employed in the disclosed embodiments, actuators powered by an electric or electronic motor or drive source can alternatively be used as the actuator component. Another embodiment would have the controller dynamically control the movement of an actuator and associated valve pin in order to meet target pressure profiles based upon (closed loop) feedback received by the controller from a pressure sensor monitoring flow of the fluid material F in the system, upstream of the mold cavity. Yet another embodiment would have the controller trigger the opening and/or closing of an actuator and associated valve pin based upon a sensed pressure or temperature condition within the mold cavity.

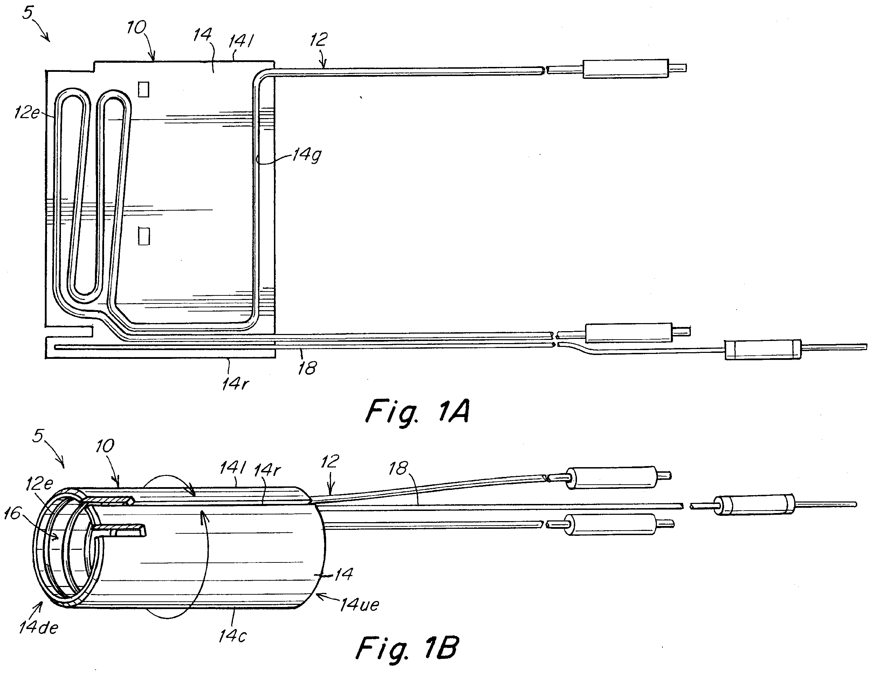

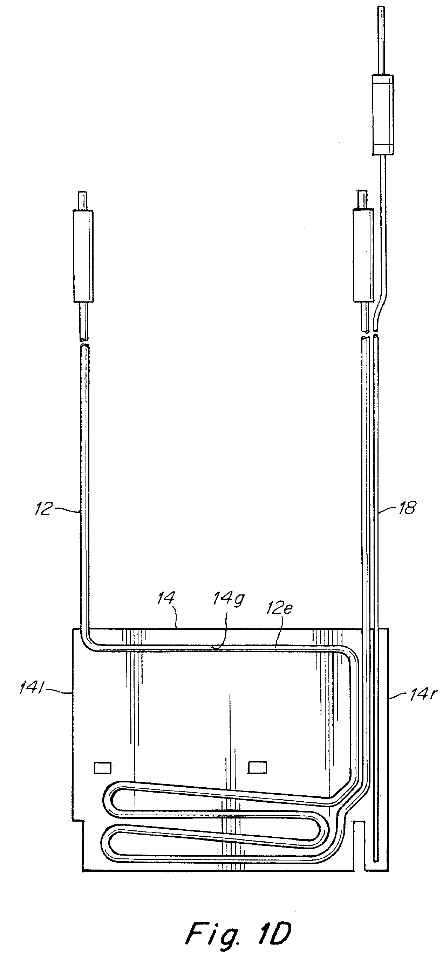

Figs. 1A-1D show a heating sleeve element 10 of a heating apparatus 5 disposed in its flat or sheet form 14 prior to being formed into a cylindrical heating cylinder form 14c. The heating sleeve 10 is comprised of the heating sleeve element 14, 14c which is comprised of a highly thermally conductive material such as brass or copper and includes a heating coil 12 that is disposed in thermally conductive contact with the heating sleeve element 14, 14c. Typically the heating coil 12 comprises a metal electrically conductive and resistive wire to which is applied an electric current that causes the wire or coil to heat up. The electrically heated wire or coil 12 is typically embedded within a complementary groove 14g formed within the body of the heating sleeve element 14, 14c in order to maximize conduction of heat from the heating coil 12 to the material of which the heating sleeve element 14, 14c is comprised. The heated wire or coil 12 can alternatively be mounted to a surface 14os or 14is of the heating cylinder preferably in compressed contact or engagement sufficient to readily enable transfer or conduction of heat from the wire or coil 12 to the highly conductive material of which the heating sleeve element 10 and cylinder 14 is comprised.

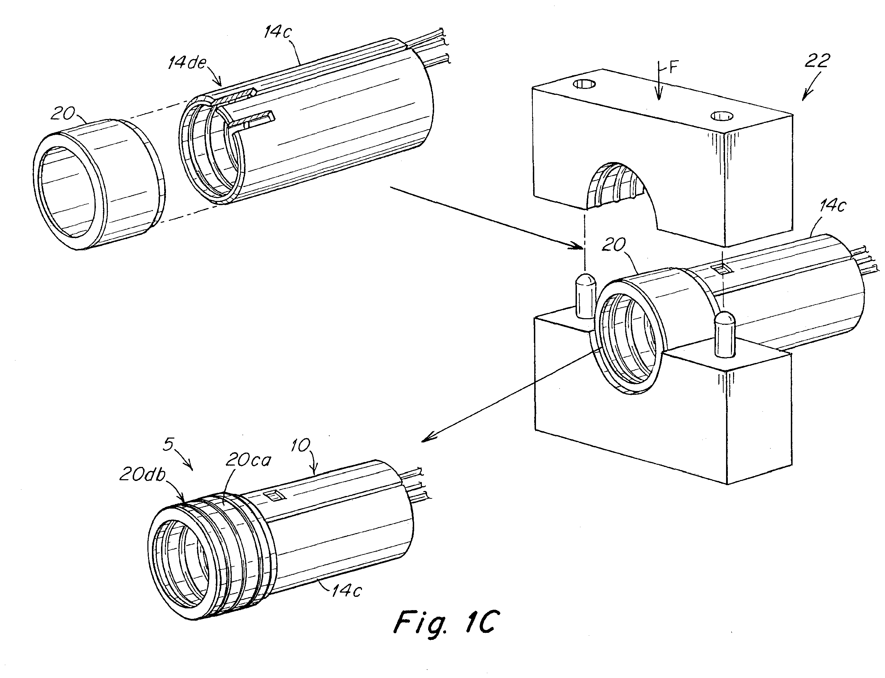

Fig. 1C shows an embodiment where the outside circumferential surface of the distal end of the cylindrically formed heating element 14, 14c is smooth or continuous without threads. In such an embodiment a securing ring 20 is compressibly attached or affixed around the circular distal end 14de of the heating element by compressibly crimping or deforming 29db the securing ring 20 with for example a crimping device 22 that exerts a crimping force F such that the inside circumferential surface 20ca of the ring 20 compressibly engages the outer circumferential surface of the distal end 14de and becomes effectively affixed thereto and simultaneously holds or maintains at least the downstream end 14de of the sheet 14 in a cylindrical configuration.

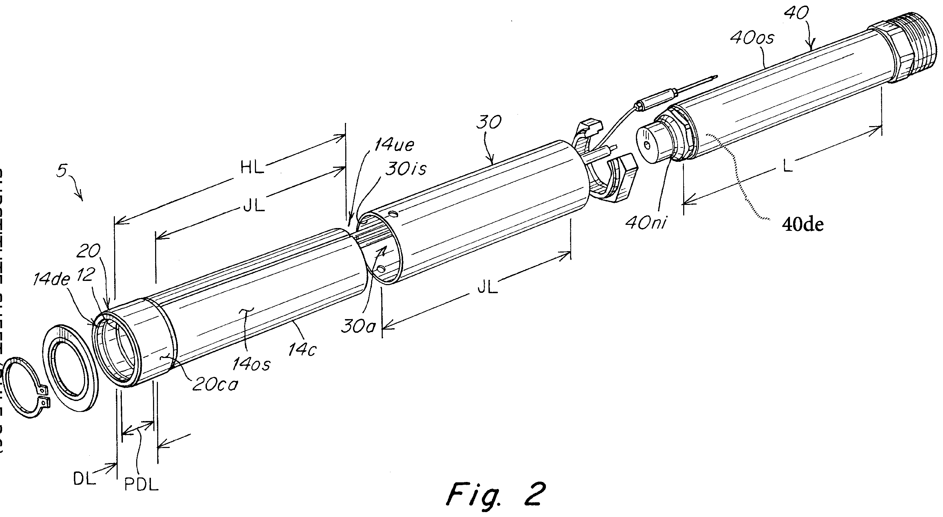

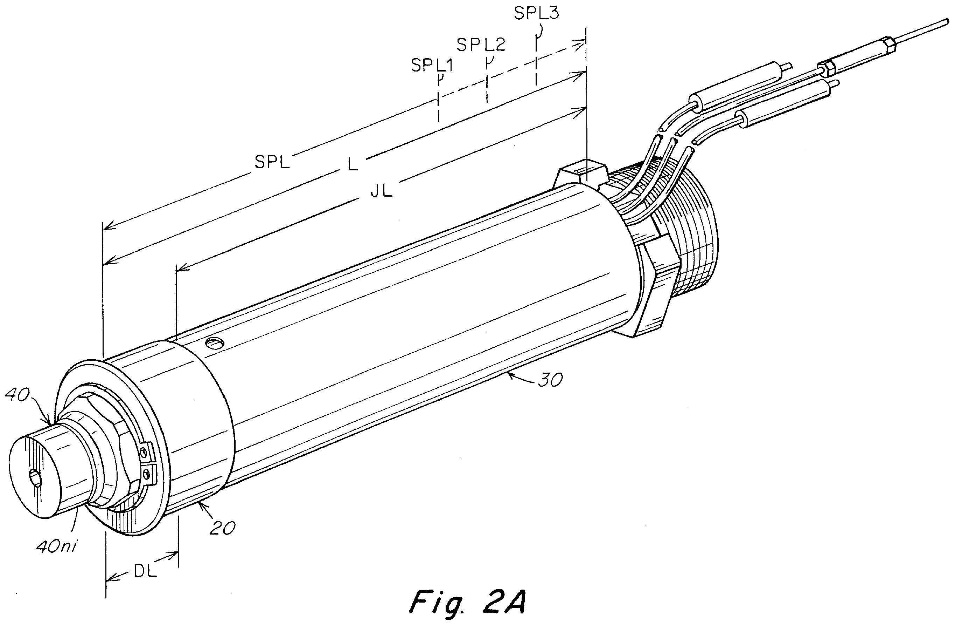

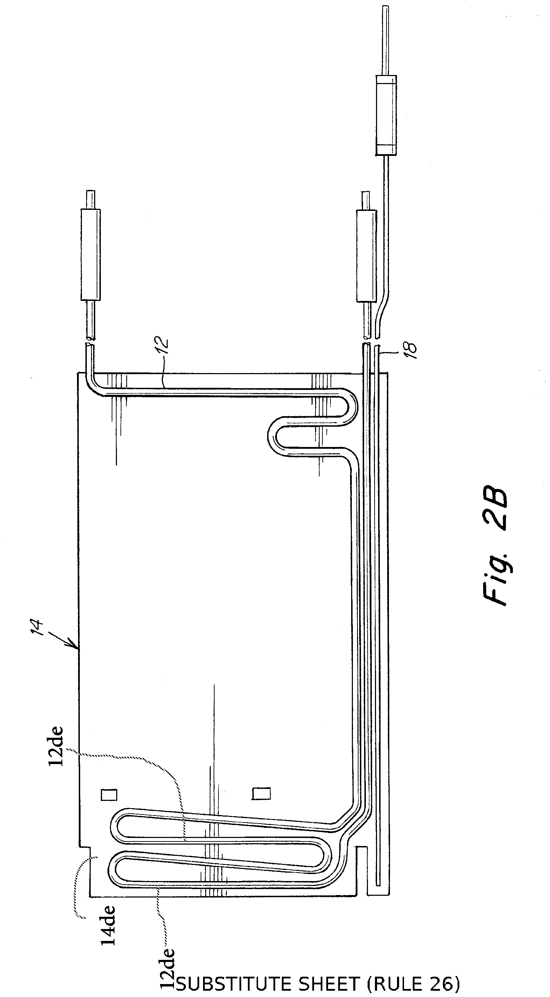

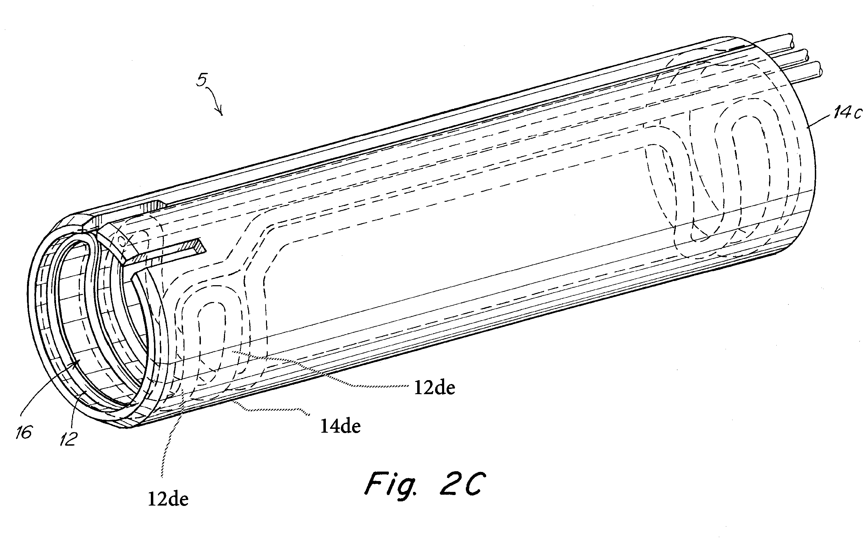

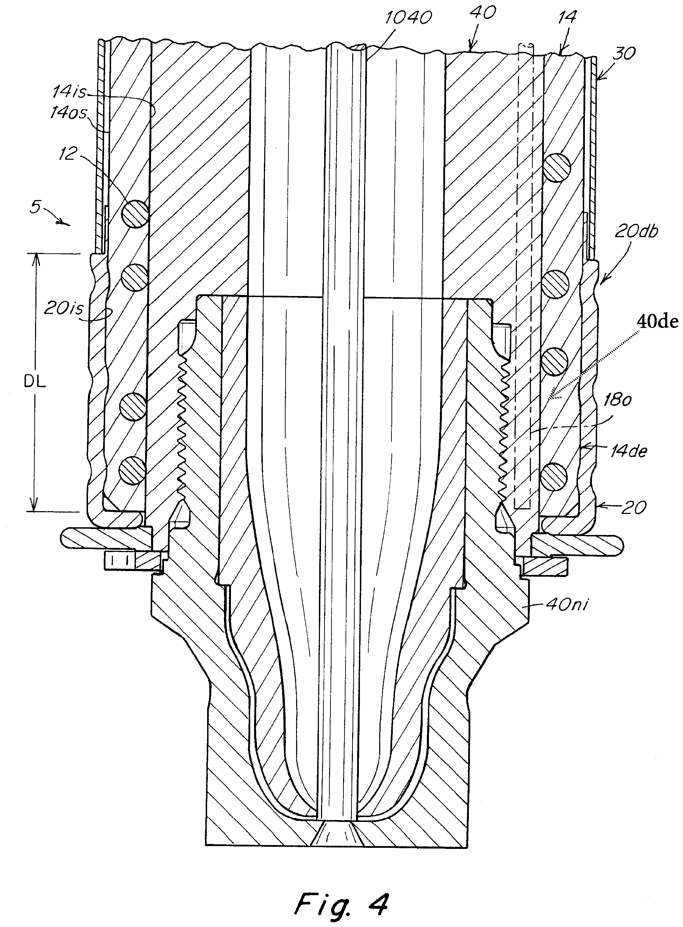

Figs. 2, 2A, 4 show a nozzle body 40 having an outer circumferential surface 40os over or around which the interior surface 14is of the heating sleeve element 14, 14c is wrapped into thermally conductive engagement such that heat generated in the body of the heating sleeve element 14, 14c is most readily and efficiently conducted to the body of the nozzle 40. In the Figs. 2, 2A embodiment a retaining cylinder, sleeve or jacket 30 having an extended receiving aperture (30a) having an extended longitudinal length (JL) and interior extended jacket surface (30is) is employed to circumferentially enclose or house the subassembly of the heating element 14 and nozzle 40. The upstream sleeve or jacket 30 is adapted to receive the upstream end or portion 14ue of the heater cylinder 14c along the extended longitudinal length JL. The upstream sleeve or jacket (30) is also adapted such that the interior extended jacket surface 30is engages the outer circumferential surface 14os of the upstream end or portion 14ue of the heater cylinder 14c.

Fig. 2B shows the heating element 14 in its initial flat sheet form with the heating element 12 disposed or arranged on the area of the sheet 14 in a predetermined configuration such that the heating element is disposed in contact with the distal end 14de in a concentrated heat configuration.12de.

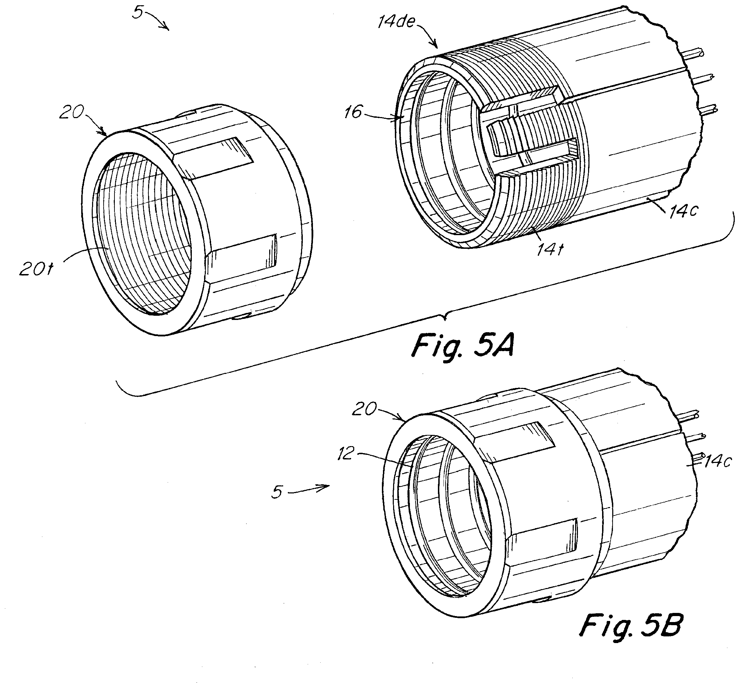

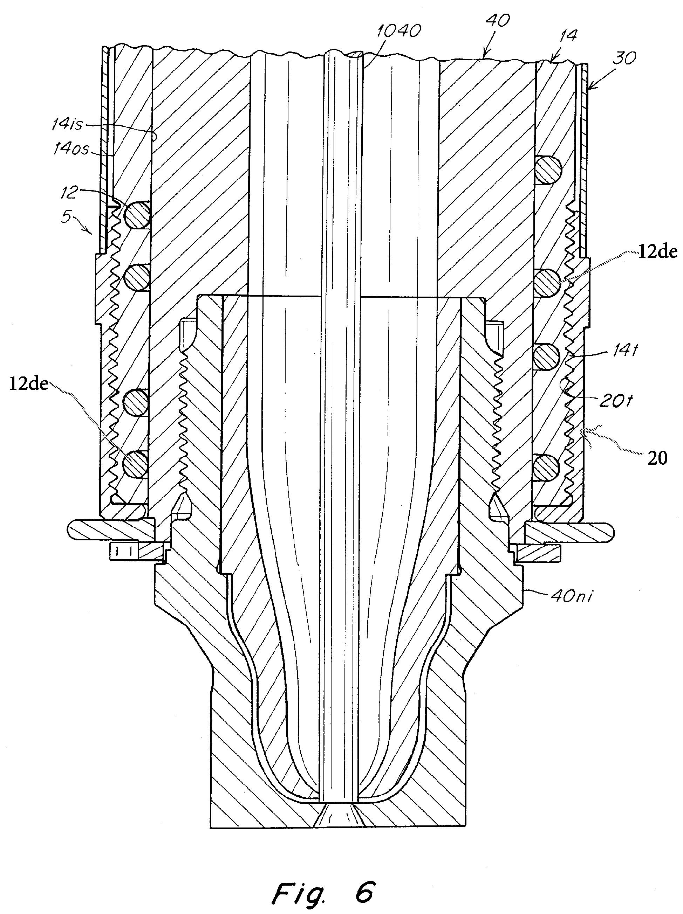

Figs. 5A, 5B, 6 show an embodiment where the interior surface of the distal end cap or ring 20 is provided with threads 20t and the outside surface 14os of the distal end 14de of the heating element is provided with complementary threads 14t that enable the retaining ring 20 to be screwably engaged onto or around the distal end 14de.

## Claims

1. A heating apparatus (5) in an injection molding apparatus (1000) comprised of an injection molding machine (500) that injects injection fluid (1018) to a heated manifold (1039) that distributes the injection fluid (1018) to one or downstream nozzles (40, 1020, 1024), the heating apparatus (5) comprising:
a heatable sleeve or jacket (10) comprised of a sheet (14) of highly heat conductive metal material, the sheet or jacket having opposing sheet edges, the sheet or jacket being bent or formed into a heating cylinder (14c) having a central channel (16) having an interior circumferential wall surface (14is) and a selected longitudinal length (HL) extending from a downstream end (14de) to an upstream end (14ue) of the heating cylinder (14c),
wherein
the central channel (16) is formed into a configuration wherein a selected nozzle (40) is received within the central channel (16) and the interior circumferential wall surface (14is) of the channel engages an outer circumferential wall surface (40os) of the selected nozzle (40),
the sheet (14) has opposing sheet edges (14r, 14l) that are disposed by the bending or forming into a select arrangement or position relative to each other upon reception of the selected nozzle (40) within the central channel (16),
the apparatus includes a stabilization ring or cylinder (20) having a central ring channel (20cc) having an inner ring circumferential surface (20is), the stabilization ring or cylinder (20) being adapted to receive a selected longitudinal portion (DL) of the downstream or distal end (14de) of the heating cylinder (14c), **characterised in that**
the stabilization ring or cylinder (20) is adapted to engage or mate the inner ring circumferential surface (20is) with an outer surface (14os) of the heating cylinder (14) extending along a predetermined length (PDL) of all or a portion of the selected longitudinal portion (DL) of the downstream or distal end (14de) of the heating cylinder (14c), the predetermined length (PDL) of the selected longitudinal portion (DL) selected such that the opposing sheet edges (14r, 14l) of the sheet (14) are disconnected over a selected portion (SPL; SPL1; SPL2; SPL3) of the longitudinal length (HL) of the heating cylinder (14c).

2. The apparatus of claim 1 further comprising a wire or coil (12) that is controllably heatable to an elevated temperature and that is mounted in heat conductive communication (12e) with the heating cylinder (14) and/or the wire or coil (12) is embedded (12e) within a groove (14g) formed within the heating cylinder (14c).

3. The apparatus of any of the foregoing claims wherein the highly heat conductive metal material comprises one or more of a copper, brass, zinc, and/or comprises at least about 90% by weight of one or more of or a mixture of one or more of brass, copper and zinc.

4. The apparatus of any of the foregoing claims wherein a temperature measuring sensor (18) is mounted on the downstream or distal end (14de) of the heating cylinder (14c) in thermal isolation (16) from the wire or coil (12, 12e).

5. The apparatus of any of the foregoing claims wherein the opposing sheet edges (14r, 14l) are interconnected or attached (14at) to each other after formation of the heating cylinder (14c) or wherein the opposing sheet edges (14r, 14l) are unconnected or unattached once the heating cylinder (14c) is formed.

6. The apparatus of any of the foregoing claims further comprising an upstream sleeve or jacket (30) having an extended receiving aperture (30a) having an extended longitudinal length (JL) and interior extended jacket surface (30is), the upstream sleeve or jacket (30) being adapted to receive an upstream end or portion (14ue) of the heater cylinder (14c) along the extended longitudinal length (JL), the upstream sleeve or jacket (30) being further adapted such that the interior extended jacket surface (30is) engages an outer circumferential surface (14os) of the upstream end or portion (14ue) of the heater cylinder (14c).

7. The apparatus of any of the foregoing claims wherein the stabilization ring or cylinder (20) is adapted to be compressed (F) around an outer circumferential surface (20ca) into a fixedly formed or deformed body (20db) having a body size that is preselected such that the inner circumferential surface (20is) of the stabilization ring or cylinder (20, 20db) is compressibly engaged with the outer circumferential surface (40os) of the downstream or distal end (14de) of the heating cylinder (14c).

8. The apparatus of any of the foregoing claims wherein the inner circumferential ring surface (20is) and the outer circumferential surface (14os) extending along at least a portion of the downstream or distal longitudinal length (DL) of the downstream or distal end (14de) of the heater cylinder (14c) have complementary threads (14t, 20t) adapted to threadably engage and interconnect with each other.

9. The apparatus of any of the foregoing claims wherein the stabilization ring or cylinder (20) is comprised of an iron containing metal material or is comprised of at least about 95% steel or iron.

10. The apparatus of any of the foregoing claims further comprising a temperature measuring sensor (18o) mounted on or in the nozzle (40) or a nozzle mount (40ni) in close adjacency to the outer surface (14os) of the downstream or distal end (14de) of the heater cylinder (14c).

11. A method of heating a distal end (40de) of an injection nozzle (40) in an injection molding apparatus (1000) comprising:
forming a heating cylinder (14c) having a central channel (16) having an interior circumferential wall surface (14is) and a selected longitudinal length (HL) extending from a downstream end (14de) to an upstream end (14ue) of the heating cylinder (14c),
wherein the method comprises:
bending or forming a sheet (14) of highly heat conductive metal material having opposing sheet edges (14r, 14l) into the heating cylinder (14c),
forming the central channel (16) into a configuration wherein the distal end (40de) of the injection nozzle (40) is received within the central channel (16) and the interior circumferential wall surface (14is) of the channel engages an outer circumferential wall surface (40os) of the injection nozzle (40),
bending or forming the sheet (14) such that the opposing sheet edges (14r, 14l) are disposed into a select arrangement or position relative to each other upon reception of the distal end (40de) of the injection nozzle (40) within the central channel (16),
adapting a stabilization ring or cylinder (20) having a central ring channel (20cc) having an inner ring circumferential surface (20is) to receive a selected longitudinal portion (DL) of the downstream or distal end (14de) of the heating cylinder (14c), and **characterised by**
adapting the stabilization ring or cylinder (20) to engage or mate the inner ring circumferential surface (20is) with an outer surface (14os) of the heating cylinder (14) extending along a predetermined length (PDL) of all or a portion of the selected longitudinal portion (DL) of the downstream or distal end (14de) of the heating cylinder (14c), the predetermined length (PDL) of the selected longitudinal portion (DL) selected such that the opposing sheet edges (14r, 14l) of the sheet (14) are disconnected over a selected portion (SPL; SPL1; SPL2; SPL3) of the longitudinal length (HL) of the heating cylinder (14c).

12. The apparatus of claim 1, wherein the stabilization ring or cylinder (20) is adapted to engage the inner ring circumferential surface (20is) around the outer circumferential surface (14os) of the heating cylinder extending along a predetermined length (PDL) of all or a portion of the selected longitudinal portion (DL) that is selected such that the opposing sheet edges (14r, 14l) are held in fixed position (14rf, 14lf) relative to each other along at least a selected portion (SPL, SPL1, SPL2, SPL3) of the longitudinal length (HL) of the heating cylinder (14c) extending from the downstream end (14de) toward the upstream end (14ue).

13. The apparatus of claim 12 wherein the predetermined length (PDL) of all or a portion of the selected longitudinal portion (DL) is selected such that the opposing sheet edges (14r, 14l) are held disconnected or unattached in fixed position (14rf, 14lf) relative to each other along at least the selected portion (SPL, SPL1, SPL2, SPL3) of the longitudinal length (HL) of the heating cylinder (14c) extending from the downstream end (14de) toward the upstream end (14ue).

14. The apparatus of any of the foregoing claims 12-13 wherein the longitudinal length of the selected longitudinal portion (DL) of the downstream or distal end (14de) of the heating cylinder (14c) is selected such that the opposing sheet edges (14r, 14l) are held disconnected or unattached in the fixed position (14rf, 14lf) relative to each other along the entire longitudinal length (HL) of the heating cylinder (14c).

15. The apparatus of any of the foregoing claims 12-14 wherein the opposing sheet edges (14r, 14l) are interconnected or attached (14at) to each other after formation of the heating cylinder (14c), wherein the attachment mechanisms (14at) preferably comprise one or more of a clasp, a wire, a weld and a clip.

16. The method of claim 11, wherein
the stabilization ring or cylinder (20) is adapted such that the inner ring circumferential surface (20is) engages around the outer circumferential surface (14os) of the heating cylinder extending along the predetermined length (PDL) of all or a portion of the selected longitudinal portion (DL) that is selected such that the opposing sheet edges (14r, 14l) are held in fixed position (14rf, 14lf) relative to each other along at least the selected portion (SPL, SPL1, SPL2, SPL3) of the longitudinal length (HL) of the heating cylinder (14c) extending from the downstream end (14de) toward the upstream end (14ue).

## Patentansprüche

1. Heizvorrichtung (5) in einer Spritzgießvorrichtung (1000), die eine Spritzgießmaschine (500) aufweist, die ein Spritzgießfluid (1018) in einen geheizten Verteiler (1039) einspritzt, der das Spritzgießfluid (1018) an eine oder mehrere stromabwärts angeordnete Düsen (40, 1020, 1024) verteilt, wobei die Heizvorrichtung (5) aufweist:
eine beheizbare Hülse oder Ummantelung (10), die ein Blech (14) aus einem hochwärmeleitfähigen Metallmaterial aufweist, wobei das Blech oder die Ummantelung gegenüberliegende Blechränder aufweist und das Blech oder die Ummantelung zu einem Heizzylinder (14c) mit einem mittigen Kanal (16) mit einer Innenumfangswandfläche (14is) und einer ausgewählten Längserstreckung (HL) gebogen oder geformt ist, die sich von einem stromabwärtsseitigen Ende (14de) zu einem stromaufwärtsseitigen Ende (14ue) des Heizzylinders (14c) erstreckt, wobei
der mittige Kanal (16) in einer Konfiguration ausgebildet ist, in der eine ausgewählte Düse (40) im mittigen Kanal (16) aufgenommen ist und die Innenumfangswandfläche (14is) des Kanals mit einer Außenumfangswandfläche (400s) der ausgewählten Düse (40) in Eingriff steht,
das Blech (14) gegenüberliegende Blechränder (14r, 14l) aufweist, die durch das Biegen oder Formen in eine ausgewählte Anordnung oder Position relativ zueinander gebracht werden, wenn die ausgewählte Düse (40) im mittigen Kanal (16) aufgenommen ist,
wobei die Vorrichtung einen Stabilisierungsring oder -zylinder (20) mit einem mittigen Ringkanal (20cc) mit einer inneren Ringumfangsfläche (20is) aufweist, wobei der Stabilisierungsring oder -zylinder (20) dazu eingerichtet ist, einen ausgewählten Längsabschnitt (DL) des stromabwärtsseitigen oder distalen Endes (14de) des Heizzylinders (14c) aufzunehmen, und
**dadurch gekennzeichnet, dass**
der Stabilisierungsring oder -zylinder (20) dazu eingerichtet ist, mit der inneren Ringumfangsfläche (20is) in Eingriff zu kommen oder mit dieser zusammenzupassen, wobei sich eine Außenfläche (14os) des Heizzylinders (14) entlang einer vorgegebenen Länge (PDL) des gesamten oder eines Teils des ausgewählten Längsabschnitts (DL) des stromabwärtsseitigen oder distalen Endes (14de) des Heizzylinders (14c) erstreckt, wobei die vorgegebene Länge (PDL) des ausgewählten Längsabschnitts (DL) so gewählt ist, dass die gegenüberliegenden Blechränder (14r, 14l) des Blechs (14) über einen ausgewählten Abschnitt (SPL; SPL1; SPL2; SPL3) der Längserstreckung (HL) des Heizzylinders (14c) getrennt sind.

2. Vorrichtung nach Anspruch 1, ferner mit einem Draht oder einer Spule (12), der/die auf eine erhöhte Temperatur steuerbar erwärmbar ist und der/die in wärmeleitender Verbindung (12e) mit dem Heizzylinder (14) montiert ist, und/oder wobei der Draht oder die Spule (12) in eine im Heizzylinder (14c) ausgebildete Nut (14g) eingebettet ist.

3. Vorrichtung nach einem der vorhergehenden Ansprüche, wobei das hochwärmeleitende Metallmaterial eines oder mehrere der Materialien Kupfer, Messing, Zink aufweist und/oder mindestens etwa 90 Gew.-% eines oder mehrerer der Materialien oder einer Mischung aus einem oder mehreren der Materialien Messing, Kupfer und Zink aufweist.

4. Vorrichtung nach einem der vorhergehenden Ansprüche, wobei ein Temperaturmesssensor (18) am stromabwärtsseitigen oder distalen Ende (14de) des Heizzylinders (14c) thermisch isoliert (16) vom Draht oder von der Spule (12, 12e) montiert ist.

5. Vorrichtung nach einem der vorhergehenden Ansprüche, wobei die gegenüberliegenden Blechränder (14r, 14l) nach dem Ausbilden des Heizzylinders (14c) miteinander verbunden oder aneinander befestigt (14at) werden oder wobei die gegenüberliegenden Blechränder (14r, 14l) nicht miteinander verbunden oder aneinander befestigt sind, sobald der Heizzylinder (14c) ausgebildet ist.

6. Vorrichtung nach einem der vorhergehenden Ansprüche, ferner mit einer stromaufwärtsseitigen Hülse oder Ummantelung (30) mit einer erweiterten Aufnahmeöffnung (30a), die eine erweiterte Längserstreckung (JL) und eine erweiterte innere Mantelfläche (30is) aufweist, wobei die stromaufwärtsseitige Hülse oder Ummantelung (30) dazu eingerichtet ist, ein stromaufwärtsseitiges Ende oder einen stromaufwärtsseitigen Abschnitt (14ue) des Heizzylinders (14c) entlang der erweiterten Längserstreckung (JL) aufzunehmen, wobei die stromaufwärtsseitige Hülse oder Ummantelung (30) ferner dazu eingerichtet ist, mit der inneren erweiterten Ummantelungsfläche (30is) an einer Außenumfangsfläche (140s) des stromaufwärtsseitigen Endes oder Abschnitts (14ue) des Heizzylinders (14c) in Eingriff zu kommen.

7. Vorrichtung nach einem der vorhergehenden Ansprüche, wobei der Stabilisierungsring oder -zylinder (20) dazu eingerichtet ist, um eine Außenumfangsfläche (20ca) herum zu einem fest geformten oder verformten Körper (20db) zusammengedrückt (F) zu werden, der eine Körpergröße aufweist, die so vorgewählt ist, dass die Innenumfangsfläche (20is) des Stabilisierungsrings oder -zylinders (20, 20db) mit der Außenumfangsfläche (400s) des stromabwärtsseitigen oder distalen Endes (14de) des Heizzylinders (14c) in elastischem Eingriff steht.

8. Vorrichtung nach einem der vorhergehenden Ansprüche, wobei die innere Umfangsringfläche (20is) und die Außenumfangsfläche (14os), die sich entlang mindestens eines Teils der stromabwärtsseitigen oder distalen Längserstreckung (DL) des stromabwärtsseitigen oder distalen Endes (14de) des Heizzylinders (14c) erstrecken, komplementäre Gewinde (14t, 20t) aufweisen, die dazu eingerichtet sind, miteinander in Gewindeeingriff zu kommen und miteinander verbunden zu werden.

9. Vorrichtung nach einem der vorhergehenden Ansprüche, wobei der Stabilisierungsring oder -zylinder (20) ein eisenhaltiges Metallmaterial oder mindestens etwa 95% Stahl oder Eisen aufweist.

10. Vorrichtung nach einem der vorhergehenden Ansprüche, ferner mit einem Temperaturmesssensor (18o), der an oder in der Düse (40) oder einer Düsenhalterung (40ni) in enger Nachbarschaft zur Außenfläche (14os) des stromabwärtsseitigen oder distalen Endes (14de) des Heizzylinders (14c) montiert ist.

11. Verfahren zum Erwärmen eines distalen Endes (40de) einer Einspritzdüse (40) in einer Spritzgießvorrichtung (1000), mit:
Ausbilden eines Heizzylinders (14c) mit einem mittigen Kanal (16), der eine innere Umfangswandfläche (14is) und eine ausgewählte Längserstreckung (HL) aufweist, die sich von einem stromabwärtsseitigen Ende (14de) zu einem stromaufwärtsseitigen Ende (14ue) des Heizzylinders (14c) erstreckt, wobei das Verfahren aufweist:
Biegen oder Formen eines Blechs (14) aus einem hochwärmeleitfähigen Metallmaterial mit gegenüberliegenden Blechrändern (14r, 14l) in den Heizzylinder (14c);
Formen des mittigen Kanals (16) in eine Konfiguration, wobei das distale Ende (40de) der Einspritzdüse (40) in dem mittigen Kanal (16) aufgenommen wird und die Innenumfangswandfläche (14is) des Kanals mit einer Außenumfangswandfläche (400s) der Einspritzdüse (40) in Eingriff steht,
Biegen oder Formen des Blechs (14) derart, dass die gegenüberliegenden Blechränder (14r, 14l) bei Aufnahme des distalen Endes (40de) der Einspritzdüse (40) innerhalb des mittigen Kanals (16) in einer ausgewählten Anordnung oder Position relativ zueinander angeordnet sind,
Anpassen eines Stabilisierungsrings oder -zylinders (20) mit einem mittigen Ringkanal (20cc), der eine innere Ringumfangsfläche (20is) zum Aufnehmen eines ausgewählten Längsabschnitts (DL) des stromabwärtsseitigen oder distalen Endes (14de) des Heizzylinders (14c) aufweist,
**gekennzeichnet durch**
Anpassen des Stabilisierungsrings oder -zylinders (20) derart dass die innere Ringumfangsfläche (20is) mit einer Außenfläche (140s) des Heizzylinders (14) in Eingriff kommt oder dieser angepasst ist, die sich entlang einer vorgegebenen Länge (PDL) des gesamten oder eines Teils des ausgewählten Längsabschnitts (DL) des stromabwärtsseitigen oder distalen Endes (14de) des Heizzylinders (14c) erstreckt, wobei die vorgegebene Länge (PDL) des ausgewählten Längsabschnitts (DL) so gewählt ist, dass die gegenüberliegenden Blechränder (14r, 14l) des Blechs (14) über einen ausgewählten Abschnitt (SPL; SPL1; SPL2; SPL3) der Längserstreckung (HL) des Heizzylinders (14c) getrennt sind.

12. Vorrichtung nach Anspruch 1, wobei der Stabilisierungsring oder -zylinder (20) dazu eingerichtet ist, mit der inneren Ringumfangsfläche (20is) um die Außenumfangsfläche (14os) des Heizzylinders herum in Eingriff kommt, die sich entlang einer vorgegebenen Länge (PDL) des gesamten oder eines Teils des ausgewählten Längsabschnitts (DL) erstreckt, der so ausgewählt ist, dass die gegenüberliegenden Blechränder (14r, 14l) entlang mindestens eines ausgewählten Abschnitts (SPL; SPL1; SPL2; SPL3) der Längserstreckung (HL) des Heizzylinders (14c), der sich vom stromabwärtsseitigen Ende (14de) zum stromaufwärtsseitigen Ende (14ue) erstreckt, in einer festen Position (14rf, 14lf) gehalten werden.

13. Vorrichtung nach Anspruch 12, wobei die vorgegebene Länge (PDL) des gesamten oder eines Teils des ausgewählten Längsabschnitts (DL) so gewählt ist, dass die gegenüberliegenden Blechränder (14r, 14l) relativ zueinander entlang mindestens des ausgewählten Abschnitts (SPL; SPL1; SPL2; SPL3) der Längserstreckung (HL) des Heizzylinders (14c), der sich vom stromabwärtsseitigen Ende (14de) zum stromaufwärtsseitigen Ende (14ue) hin erstreckt, in einem nicht verbundenen oder nicht befestigten Zustand in einer festen Position (14rf, 14lf) gehalten werden.

14. Vorrichtung nach Anspruch 12 oder 13, wobei die Längserstreckung des ausgewählten Längsabschnitts (DL) des stromabwärtsseitigen oder distalen Endes (14de) des Heizzylinders (14c) so gewählt ist, dass die gegenüberliegenden Blechränder (14r, 14l) entlang der gesamten Längserstreckung (HL) des Heizzylinders (14c) in einem nicht verbundenen oder nicht befestigten Zustand in der festen Position (14rf, 141f) gehalten werden.

15. Vorrichtung nach einem der Ansprüche 12 bis 14, wobei die gegenüberliegenden Blechränder (14r, 14l) nach dem Ausbilden des Heizzylinders (14c) miteinander verbunden oder aneinander befestigt (14at) sind, wobei die Befestigungsmechanismen (14at) vorzugsweise eine oder mehrere Befestigungsmechanismen unter einer Klammer, einem Draht, einer Schweißnaht und einer Klemme aufweisen.

16. Verfahren nach Anspruch 11, wobei
der Stabilisierungsring oder -zylinder (20) derart eingerichtet ist, dass die innere Ringumfangsfläche (20is) um die Außenumfangsfläche (140s) des Heizzylinders in Eingriff steht, die sich entlang der vorgegebenen Länge (PDL) des gesamten oder eines Teils des ausgewählten Längsabschnitts (DL) erstreckt, der so ausgewählt ist, dass die gegenüberliegenden Blechränder (14r, 14l) entlang mindestens des ausgewählten Abschnitts (SPL; SPL1; SPL2; SPL3) der Längserstreckung (HL) des Heizzylinders (14c), der sich vom stromabwärtsseitigen Ende (14de) zum stromaufwärtsseitigen Ende (14ue) hin erstreckt, in einer festen Position gehalten werden.

## Revendications

1. Appareil de chauffage (5) dans un appareil de moulage par injection (1000) comprenant une machine de moulage par injection (500) qui injecte du fluide d'injection (1018) dans un collecteur chauffé (1039) qui distribue le fluide d'injection (1018) à une ou plusieurs buses aval (40, 1020, 1024), l'appareil de chauffage (5) comprenant :
un manchon ou une chemise chauffable (10) composée d'une feuille (14) de matériau métallique hautement conducteur de chaleur, la feuille ou la chemise ayant des bords de feuille opposés, la feuille ou la chemise étant pliée ou formée en un cylindre chauffant (14c) ayant un canal central (16) ayant une surface de paroi circonférentielle intérieure (14is) et une longueur longitudinale sélectionnée (HL) s'étendant d'une extrémité aval (14de) à une extrémité amont (14ue) du cylindre chauffant (14c),
dans lequel :
le canal central (16) est formé dans une configuration dans laquelle une buse sélectionnée (40) est reçue à l'intérieur du canal central (16) et la surface de paroi circonférentielle intérieure (14is) du canal engage une surface de paroi circonférentielle extérieure (40os) de la buse sélectionnée (40),
la feuille (14) a des bords de feuille opposés (14r, 14l) qui sont disposés par pliage ou formage dans un agencement ou une position sélectionnés l'un par rapport à l'autre lors de la réception de la buse sélectionnée (40) dans le canal central (16),
l'appareil comprend un anneau ou un cylindre de stabilisation (20) ayant un canal annulaire central (20cc) ayant une surface circonférentielle annulaire intérieur (20is), l'anneau ou le cylindre de stabilisation (20) étant adapté pour recevoir une partie longitudinale sélectionnée (DL) de l'extrémité aval ou distale (14de) du cylindre chauffant (14c), et **caractérisé en ce que**
l'anneau ou le cylindre de stabilisation (20) est adapté pour engager ou accoupler la surface circonférentielle annulaire intérieur (20is) avec une surface extérieure (14os) du cylindre chauffant (14) s'étendant sur une longueur prédéterminée (PDL) de tout ou une partie de la portion longitudinale sélectionnée (DL) de l'extrémité aval ou distale (14de) du cylindre chauffant (14c), la longueur prédéterminée (PDL) de la portion longitudinale sélectionnée (DL) étant sélectionnée de telle sorte que les bords de feuille opposés (14r, 14l) de la feuille (14) soient déconnectés sur une partie sélectionnée (SPL ; SPL1 ; SPL2 ; SPL3) de la longueur longitudinale (HL) du cylindre chauffant (14c).

2. Appareil selon la revendication 1 comprenant en outre un fil ou une bobine (12) qui peut être chauffable de manière contrôlée à une température élevée et qui est monté en communication conductrice de chaleur (12e) avec le cylindre chauffant (14) et/ou le fil ou la bobine (12) est encastré (12e) dans une rainure (14g) formée dans le cylindre chauffant (14c).

3. Appareil selon l'une quelconque des revendications précédentes, dans lequel le matériau métallique hautement conducteur de chaleur comprend un ou plusieurs éléments parmi le cuivre, le laiton, le zinc et/ou comprend au moins environ 90 % en poids d'un ou plusieurs éléments ou d'un mélange d'un ou plusieurs éléments parmi le laiton, le cuivre et le zinc.

4. Appareil selon l'une quelconque des revendications précédentes, dans lequel un capteur de mesure de température (18) est monté sur l'extrémité aval ou distale (14de) du cylindre chauffant (14c) en isolation thermique (16) par rapport au fil ou à la bobine (12, 12e).

5. Appareil selon l'une quelconque des revendications précédentes, dans lequel les bords de feuille opposés (14r, 14l) sont interconnectés ou attachés (14at) les uns aux autres après la formation du cylindre chauffant (14c) ou dans lequel les bords de feuille opposés (14r, 14l) sont déconnectés ou non attachés une fois que le cylindre chauffant (14c) est formé.

6. Appareil selon l'une quelconque des revendications précédentes, comprenant en outre un manchon ou une chemise amont (30) comportant une ouverture de réception étendue (30a) ayant une longueur longitudinale étendue (JL) et une surface de chemise étendue intérieure (30is), le manchon ou la chemise amont (30) étant adapté pour recevoir une extrémité ou une partie amont (14ue) du cylindre chauffant (14c) le long de la longueur longitudinale étendue (JL), le manchon ou la chemise amont (30) étant en outre adapté de telle sorte que la surface de chemise étendue intérieure (30is) engage une surface circonférentielle extérieure (14os) de l'extrémité ou de la partie amont (14ue) du cylindre chauffant (14c).

7. Appareil selon l'une quelconque des revendications précédentes, dans lequel la bague ou le cylindre de stabilisation (20) est conçu pour être comprimé (F) autour d'une surface circonférentielle extérieure (20ca) en un corps (20db) formé ou déformé de manière fixe ayant une taille de corps qui est présélectionnée de telle sorte que la surface circonférentielle intérieure (20is) de la bague ou du cylindre de stabilisation (20, 20db) soit engagée de manière compressible avec la surface circonférentielle extérieure (40os) de l'extrémité aval ou distale (14de) du cylindre chauffant (14c).

8. Appareil selon l'une quelconque des revendications précédentes, dans lequel la surface annulaire circonférentielle intérieure (20is) et la surface circonférentielle extérieure (14os) s'étendant le long d'au moins une partie de la longueur longitudinale aval ou distale (DL) de l'extrémité aval ou distale (14de) du cylindre chauffant (14c) ont des filetages complémentaires (14t, 20t) conçus pour s'engager par filetage et s'interconnecter l'un avec l'autre.

9. Appareil selon l'une quelconque des revendications précédentes, dans lequel la bague ou le cylindre de stabilisation (20) est constitué d'un matériau métallique contenant du fer ou est constitué d'au moins environ 95 % d'acier ou de fer.

10. Appareil selon l'une quelconque des revendications précédentes, comprenant en outre un capteur de mesure de température (18o) monté sur ou dans la buse (40) ou un support de buse (40ni) à proximité immédiate de la surface extérieure (14os) de l'extrémité aval ou distale (14de) du cylindre chauffant (14c).

11. Procédé de chauffage d'une extrémité distale (40de) d'une buse d'injection (40) dans un appareil de moulage par injection (1000) comprenant :
former un cylindre chauffant (14c) ayant un canal central (16) ayant une surface de paroi circonférentielle intérieure (14is) et une longueur longitudinale sélectionnée (HL) s'étendant d'une extrémité aval (14de) à une extrémité amont (14ue) du cylindre chauffant (14c),
dans lequel le procédé comprend :
plier ou former une feuille (14) de matériau métallique hautement conducteur de chaleur ayant des bords de feuille opposés (14, 141) dans le cylindre chauffant (14c),
former le canal central (16) dans une configuration dans laquelle l'extrémité distale (40de) de la buse d'injection (40) est reçue dans le canal central (16) et la surface de paroi circonférentielle intérieure (14is) du canal engage une surface de paroi circonférentielle extérieure (40os) de la buse d'injection (40),
plier ou former la feuille (14) de telle sorte que les bords de feuille opposés (14r, 141) sont disposés dans un agencement ou une position sélectionnés l'un par rapport à l'autre lors de la réception de l'extrémité distale (40de) de la buse d'injection (40) dans le canal central (16),
adapter une bague ou un cylindre de stabilisation (20) ayant un canal annulaire central (20cc) ayant une surface circonférentielle annulaire intérieur (20is) pour recevoir une partie longitudinale sélectionnée (DL) de l'extrémité aval ou distale (14de) du cylindre chauffant (14c), et **caractérisée par**
adapter la bague ou le cylindre de stabilisation (20) pour engager ou accoupler la surface circonférentielle annulaire intérieure (20is) avec une surface extérieure (14os) du cylindre chauffant (14) s'étendant le long d'une longueur prédéterminée (PDL) de tout ou partie de la partie longitudinale sélectionnée (DL) de l'extrémité aval ou distale (14de) du cylindre chauffant (14c), la longueur prédéterminée (PDL) de la partie longitudinale sélectionnée (DL) étant sélectionnée de telle sorte que les bords de feuille opposés (14r, 14l) de la feuille (14) sont déconnectés sur une partie sélectionnée (SPL ; SPL1 ; SPL2 ; SPL3) de la longueur longitudinale (HL) du cylindre chauffant (14c).

12. Appareil selon la revendication 1, dans lequel la bague ou le cylindre de stabilisation (20) est adapté pour venir en prise avec la surface circonférentielle annulaire intérieure (20is) autour de la surface circonférentielle extérieure (14os) du cylindre chauffant s'étendant le long d'une longueur prédéterminée (PDL) de la totalité ou d'une partie de la partie longitudinale sélectionnée (DL) qui est sélectionnée de telle sorte que les bords de feuille opposés (14r, 14l) soient maintenus en position fixe (14rf, 14lf) l'un par rapport à l'autre le long d'au moins une partie sélectionnée (SPL, SPL1, SPL2, SPL3) de la longueur longitudinale (HL) du cylindre chauffant (14c) s'étendant de l'extrémité aval (14de) vers l'extrémité amont (14ue).

13. Appareil selon la revendication 12, dans lequel la longueur prédéterminée (PDL) de la totalité ou d'une partie de la partie longitudinale sélectionnée (DL) est sélectionnée de telle sorte que les bords de feuille opposés (14r, 14l) soient maintenus déconnectés ou non attachés dans une position fixe (14rf, 14lf) l'un par rapport à l'autre le long d'au moins la partie sélectionnée (SPL, SPL1, SPL2, SPL3) de la longueur longitudinale (HL) du cylindre chauffant (14c) s'étendant de l'extrémité aval (14de) vers l'extrémité amont (14ue).

14. Appareil selon l'une quelconque des revendications 12 à 13 précédentes, dans lequel la longueur longitudinale de la partie longitudinale sélectionnée (DL) de l'extrémité aval ou distale (14de) du cylindre chauffant (14c) est sélectionnée de telle sorte que les bords de feuille opposés (14r, 14l) soient maintenus déconnectés ou non attachés dans la position fixe (14rf, 14lf) l'un par rapport à l'autre sur toute la longueur longitudinale (HL) du cylindre chauffant (14c).

15. Appareil selon l'une quelconque des revendications 12 à 14 précédentes, dans lequel les bords de feuille opposés (14r, 14l) sont interconnectés ou attachés (14at) l'un à l'autre après la formation du cylindre chauffant (14c), dans lequel les mécanismes de fixation (14at) comprennent de préférence un ou plusieurs éléments parmi un fermoir, un fil, une soudure et un clip

16. Procédé selon la revendication 11, dans lequel l'anneau ou le cylindre de stabilisation (20) est conçu de telle sorte que la surface circonférentielle annulaire intérieure (20is) s'engage autour de la surface circonférentielle extérieure (14os) du cylindre chauffant s'étendant le long de la longueur prédéterminée (PDL) de la totalité ou d'une partie de la partie longitudinale sélectionnée (DL) qui est sélectionnée de telle sorte que les bords de feuille opposés (14r, 14l) soient maintenus en position fixe (14rf, 14lf) l'un par rapport à l'autre le long d'au moins la partie sélectionnée (SPL, SPL1, SPL2, SPL3) de la longueur longitudinale (HL) du cylindre chauffant (14c) s'étendant de l'extrémité aval (14de) vers l'extrémité amont (14ue).
